Europäisches Patentamt

European Patent Office

Office européen des brevets

(11) Publication number: **0 156 192**
**A1**

(12) # EUROPEAN PATENT APPLICATION

(21) Application number: **85102395.2**

(22) Date of filing: **04.03.85**

(51) Int. Cl.⁴: **G 01 V 9/04**
**B 07 C 5/34, G 06 M 1/10**

(30) Priority: **05.03.84 JP 42798/84**

(43) Date of publication of application:
**02.10.85 Bulletin 85/40**

(84) Designated Contracting States:
**BE CH DE FR GB IT LI NL SE**

(71) Applicant: **TETRA PAK INTERNATIONAL AKTIEBOLAG**
**Rabyholms Alle**
**Lund(SE)**

(72) Inventor: **Kaneko, Yutaka**
**9-2, Nishikoujiya 1-chome**
**Ota-ku Tokyo(JP)**

(72) Inventor: **Brosten, Göran**
**Yoyogi Terrace App. 402 32-27, Tomigaya 1-chome**
**Shibuya-ku Tokyo(JP)**

(74) Representative: **Glawe, Delfs, Moll & Partner**
**Patentanwälte**
**Postfach 26 01 62 Liebherrstrasse 20**
**D-8000 München 26(DE)**

(54) **Method for detecting position of conveyed articles.**

(57) A method for detecting the position of square-shaped articles such as containers for milk, juice, etc. using a photoelectric tube, each article having a stepped portion at its corner which is formed by folding back a part of the article. Light is projected from the photoelectric tube so as to diagonally across the stepped portion of the article being conveyed by a conveyor.

FIG. 4

EP 0 156 192 A1

# METHOD FOR DETECTING POSITION OF CONVEYED ARTICLES

BACKGROUND OF THE INVENTION

      1.   Field of the Invention

      The present invention relates to a method for detecting articles which are carried by a conveyor, and more particularly to a method for detecting square shaped articles which are formed with a stepped portion.

      2.   Prior Art

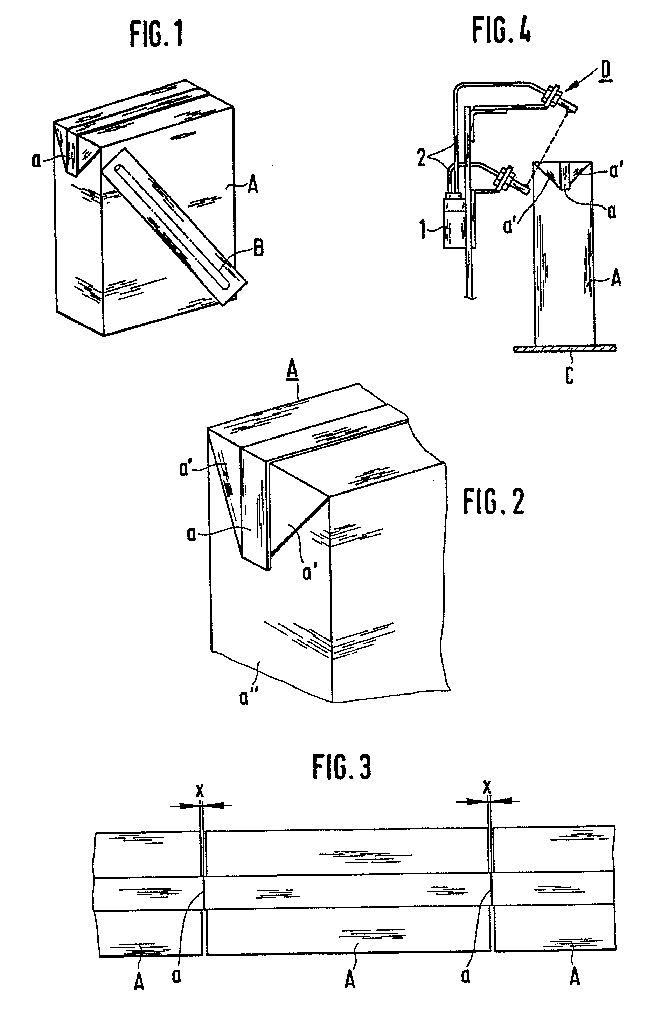

      Some square-shaped containers for containing milk, juice, etc. as shown in Figure 1 are formed such that the edge a is folded back along the upper end of the container A. The folded-back edge portion a sticks out over the other portions a' and a'' as shown in Figure 2.

      When attaching a straw B to such a container A or wrapping up the container A for packing, in order to improve the operational efficiency, it has been a practice to feed the containers A one after another by a conveyer C and detect the container A with a phototube disposed along the side of conveyer C. It is sufficient to use an ordinary photoelectric sensor having a photoelectric tube to detect the position of the container A when the containers A are carried one by one with a space left in between.

      However, when the containers A are fed contiguously or tailing one after another as shown in Figure 3, the light is intercepted (blocked) all the time. Therefore, the light cannot

1

be sensed by an ordinary photoelectric sensor which uses a phototube, resulting in failure to detect the position of the articles.

## SUMMARY OF THE INVENTION

The object of the present invention is to provide a method for detecting articles or containers carried by a conveyor even when the containers are fed contiguously, i.e. one after another.

For achieving the foregoing object, the inventor noted and utilized the fact that the stepped portion is formed at the corner of the article and designed a method for reliably detecting the article by projecting the light from a diagonal direction to the space formed by the aforementioned stepped portions of the contiguous articles.

## BRIEF DESCRIPTION OF THE DRAWINGS

The attached drawings show one embodiment in accordance with the present invention in which:

Figure 1 is a perspective view showing an example of the article subjected to the detecting operation carried out by the present invention;

Figure 2 is an enlarged perspective view;

Figure 3 is an enlarged plan view showing the articles fed in succession, one after another; and

Figure 4 is a side view illustrating the passing direction of the light projected from the photoelectric tube.

2

DETAILED DESCRIPTION OF THE INVENTION

Hereunder a detailed description of the preferred embodiment of this invention will be given with reference to the attached drawings.

As shown in Figure 4, articles, such as containers A, are carried by a conveyor C. A photoelectric sensor D which uses a phototube is provided by the side of the conveyor C. The optical sensor axis of the light projected from the photoelectric sensor D is arranged to intersect the upper corner of the article A diagonally as shown in the Figure.

By means of this arrangement, when the articles, supplied in sequence with spaces between them, pass through the side of the photoelectric sensor D, this photoelectric sensor D reliably detects the stepped portion formed at the upper corner of the article, this is, a gap X shown in Figure 3. Also, even when the articles are fed one after another in a form to push and to be pushed one by one as shown in Figure 3, the photoelectric sensor D does not fail to detect the gap X formed. The gap X is formed by the stepped portion of the articles next to each other at the upper corner of the article.

In the embodiment shown here, since the stepped portion formed at the upper corner of the article, which forms the gap X between the articles in Figure 3, is extremely small or thin, the photoelectric tube used is of an optical fiber type that is capable of detecting even such a small gap. In Figure 4, the numeral 1 is a photoelectric tube and 2 denotes the optical fibers.

3

0156192

This embodiment illustrates a case wherein the front end portion of the article is detected by the photoelectric sensor which uses the phototube. However, it may be arranged to detect the rear end portion of the article by the photoelectric sensor. The essential point here is that the stepped portion formed at the corner of the article is detected by the photoelectric sensor using the phototube. Furthermore, in the embodiment shown here, the stepped portion is formed at the upper corner of the article, but the method of this invention still applies also to cases wherein the stepped portion is formed at the lower corner of the article.

As should be apparent from the foregoing description, in the method according to the present invention, light is projected along the diagonal direction to the corner of the article having the stepped portion. Therefore, the article can be reliably detected regardless of whether the articles are conveyed in sequence with a distance left in between or the articles are fed forth in quick succession by contiguously tailing one after the other.

In addition, using the position detection method provided by this invention, the positional adjustment of a pair of photoelectric tubes can readily be carried out. As a result, the sizes of the articles do not cause any trouble when adjusting the position of the photoelectric sensor, and reliable detection performance can be obtained.

4

CLAIMS:

1.   A method for detecting the position of articles by photoelectric tube comprising:

conveying a series of square-shaped articles in a longitudinal direction of a conveyor, each one of the articles having a stepped portion at its corner; and

projecting light from a photoelectric tube so that the light diagonally cross the stepped portion of the article.

2.   A method for detecting position of articles according to Claim 1, wherein the photoelectric tube is of an optical fiber type.

3.   A method for detecting position of articles according to Claim 1, wherein the stepped portion formed at the corner of the article is composed of a folded-back edge portion and other portions of the article.

5

FIG.1

FIG.4

FIG.2

FIG.3

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 067 625 (ENZINGER-UNION-WERKE A.G.) * Figure 1; column 3, lines 19-24; column 4, lines 13-15 * | 1 | G 01 V 9/04 B 07 C 5/34 G 06 M 1/10 |
| Y | | 2 | |
| Y | ELEKTROTECHNIK UND MASCHINENBAU, vol. 100, no. 9, September 1983, pages 382-386, Vienna, AT; J.P.SOBITSCH: "Lichtschranken für industrielle Steuerung" * Figure 7 * | 8 | |
| X | EP-A-0 100 209 (EGGTRONICS LTD) * Figure 2; claims 1-6 * | 1 | |
| A | US-A-3 666 093 (THORNTON) * Figures 5,6; column 4, lines 5-10 * | 1 | TECHNICAL FIELDS SEARCHED (Int. Cl.4) B 07 C G 01 V G 06 K G 06 M |
| A | GB-A-1 376 304 (HIRD-BROWN LTD.) * Figures 1-5 * | 2 | |

The present search report has been drawn up for all claims

| Place of search THE HAGUE | Date of completion of the search 11-06-1985 | Examiner PESCHEL W. |
|---|---|---|